# EUROPÄISCHE PATENTSCHRIFT

(11) **EP 3 009 299 B1**
(45) Veröffentlichungstag und Bekanntmachung des Hinweises auf die Patenterteilung: **13.03.2019**
(21) Anmeldenummer: 15187345.2
(22) Anmeldetag: 29.09.2015
(51) Int. Cl.: B60P 7/08

(54) **SPANNRATSCHE**
RATCHET TENSIONING DEVICE
TENDEUR CLIQUET

(30) Priorität: 17.10.2014 DE 102014115146
(43) Veröffentlichungstag der Anmeldung: 20.04.2016
(73) Patentinhaber: WIHAG Fahrzeugbausysteme GmbH, 33602 Bielefeld (DE)
(72) Erfinder: KOTTKAMP, Uwe, 32312 Lübbecke (DE)
(74) Vertreter: Dantz, Jan Henning

(56) Entgegenhaltungen:
- EP-A1- 0 455 085
- DE-T2- 69 313 096
- US-A- 2 993 680
- US-A1- 2012 167 707

## Beschreibung

Die vorliegende Erfindung betrifft eine Spannratsche, insbesondere zum Spannen von Planen an LKWs, nach dem Oberbegriff des Anspruches 1.

Die EP 455 085 offenbart eine Spannratsche für einen Strang, bei dem ein Spannhebel eine Aufwickelwelle drehen kann und über ein Antriebsgesperre in unterschiedlichen Winkelpositionen gegen Rückdrehung gesichert werden kann. Für eine Entriegelung wird eine am Spannhebel angeformte Entriegelungsnocke bewegt, so dass die Ratsche schrittweise entriegelbar ist. Bei einer solchen Spannratsche besteht das Problem, dass diese im Außenbereich, beispielsweise zum Spannen von Planen an LKWs, leicht verschmutzen kann und die mechanischen Bauteile verklemmen können. Zudem ist die Spannratsche aus einer Vielzahl von Bauteilen hergestellt und aufwändig in der Montage. Für die Bedienung der Spannratsche muss einerseits der Spannhebel gedreht werden, und ferner wird meist ein zusätzliches Entriegelungselement getrennt von dem Spannhebel vorgesehen, so dass ein abwechselndes Spannen und Lösen mehrere Handgriffe erfordert.

Die DE 693 13 096 T2 offenbart eine handbetriebene Vorrichtung zum Wickeln von Wickelgut auf eine Welle, wobei ein verschwenkbarer Hebel mit einem verschiebbaren Betätigungsgriff vorgesehen ist. Durch Verschieben des Betätigungsgriffes kann ein Eingriff mit einem Zahnrad gelöst werden, das mit einer Sperrklinke in Eingriff steht. Eine ähnliche Spannratsche ist auch in der US 2012/0167707 A1 gezeigt.

Es ist daher Aufgabe der vorliegenden Erfindung, eine Spannratsche zu schaffen, die einfach zu bedienen ist und aus relativ wenigen Bauteilen kompakt aufgebaut werden kann.

Zur Lösung dieser Aufgabe wird eine Spannratsche mit den Merkmalen des Anspruches 1 vorgeschlagen. Vorteilhafte Ausgestaltungen sind in den Unteransprüchen enthalten.

Erfindungsgemäß umfasst die Spannratsche einen Antriebshebel zum Drehen der Antriebswelle, wobei der Antriebshebel über ein Kopplungselement zumindest in eine Antriebsrichtung mit dem Zahnkranz koppelbar ist, wobei ein Abschnitt des Antriebshebels in radiale Richtung bewegbar ist, um das Kopplungselement außer Eingriff mit dem Zahnkranz zu bringen. Dadurch kann der Antriebshebel sowohl zum Spannen eingesetzt werden als auch für einen Lösevorgang, indem das Kopplungselement außer Eingriff mit dem Zahnkranz gebracht wird und der Antriebshebel frei bewegt werden kann. Dies ermöglicht eine einhändige Bedienung der Spannratsche, so dass die andere Hand für andere Zwecke genutzt werden kann. Zudem lässt sich die Spannratsche mit vergleichsweise wenigen Bauteilen herstellen, da der Antriebshebel neben der Spannfunktion auch gleichzeitig über einen radial bewegbaren Abschnitt eine Entriegelungsfunktion besitzt. Die für die Entriegelung notwendigen Bauteile können dabei geschützt an dem Gehäuse vorgesehen werden.

Vorzugsweise umfasst der Antriebshebel einen rohrförmigen Abschnitt, der relativ zu einem drehbar gelagerten Hebelelement verschiebbar ist. Dadurch kann der Benutzer den rohrförmigen Abschnitt greifen und wahlweise für einen Spannvorgang drehen oder für eine Entriegelung an diesem ziehen. Der rohrförmige Abschnitt kann dabei zusammen mit dem Kopplungselement durch eine Feder in die verriegelte Position vorgespannt sein, um ein versehentliches Entriegeln zu vermeiden.

Gemäß der Erfindung ist mindestens eine Sperrklinke drehbar an dem Gehäuse gelagert, um die Antriebswelle mit dem Zahnkranz in unterschiedlichen Winkelpositionen verriegeln zu können. Die mindestens eine Sperrklinke ist dabei drehfest mit einem Betätigungsabschnitt zum Entriegeln der Sperrklinke verbunden, wobei der Antriebshebel gegen den Betätigungsabschnitt bewegbar ist, um die Sperrklinke zu entriegeln. Dadurch kann der Benutzer nach einem Ziehen an einem Abschnitt des Antriebshebels zum Entriegeln diesen gegen den Betätigungsabschnitt bewegen, um auch die mindestens eine Sperrklinke zu entriegeln. Diese Vorgänge können mit einer Hand in einfacher Weise ausgeführt werden. Selbst wenn die Sperrklinke und die Spannratsche verschmutzt sind, muss der Benutzer lediglich den rohrförmigen Abschnitt des Antriebshebels greifen, um sämtliche Bedienvorgänge ausführen zu können. Aufgrund der Hebelverhältnisse ist eine leichtgängige Bewegung des Antriebshebels möglich, um die Sperrklinke mit dem Betätigungsabschnitt zu bewegen.

Das Gehäuse der Spannratsche ist vorzugsweise aus einem U-förmigen gebogenen Stahlblech gebildet oder weist ein solches auf. Dadurch werden Gussteile vermieden, die aufwändiger in der Herstellung sind. An dem U-förmigen Gehäuse kann sowohl die Antriebswelle als auch die Sperrklinke drehbar gelagert werden.

Die Erfindung wird nachfolgend anhand eines Ausführungsbeispiels mit Bezug auf die beigefügten Zeichnungen näher erläutert. Es zeigen:

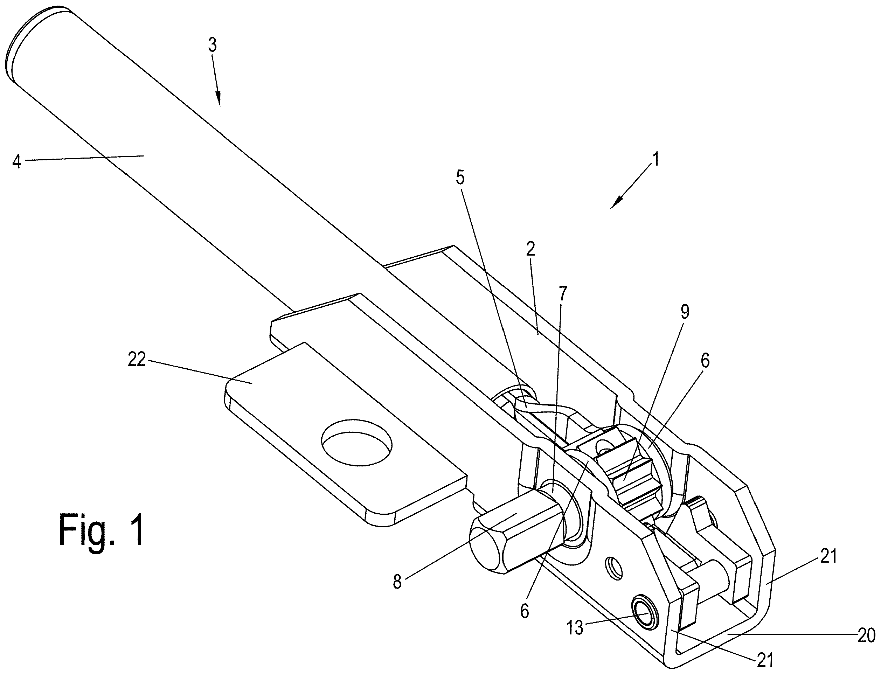

- Figur 1: eine perspektivische Ansicht einer erfindungsgemäßen Spannratsche;

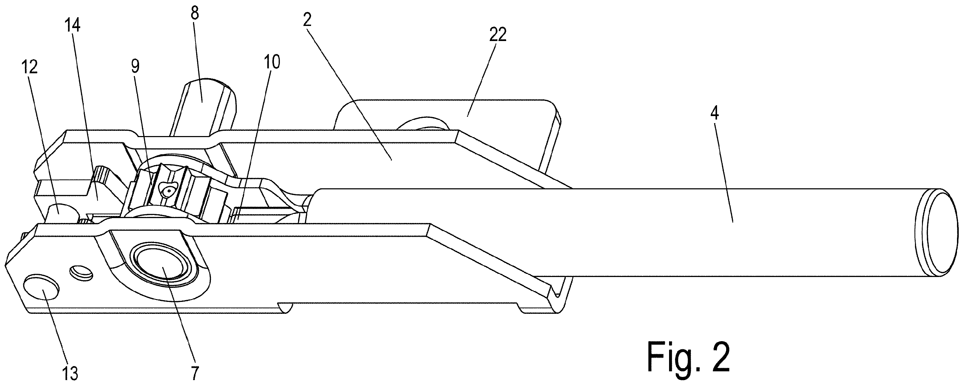

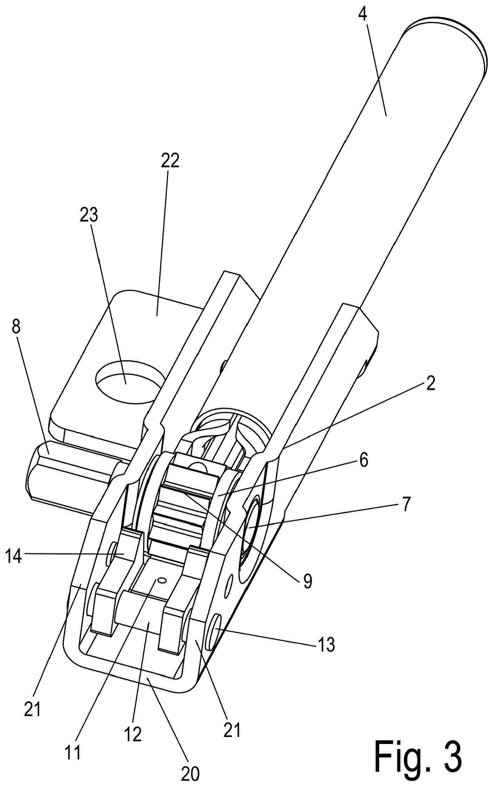

- Figuren 2 und 3: zwei weitere perspektivische Ansichten der Spannratsche der Figur 1, und

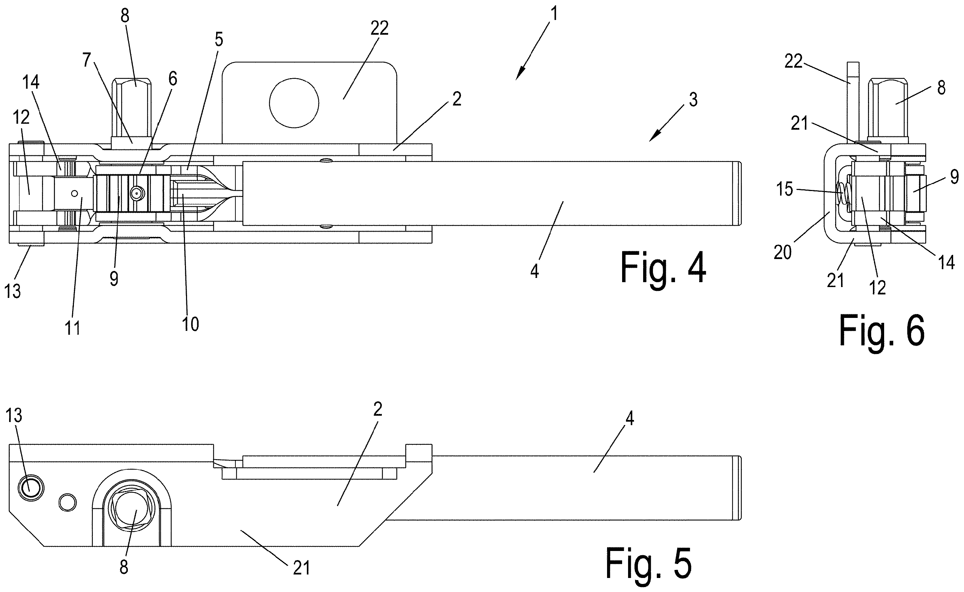

- Figuren 4 bis 6: mehrere Ansichten der Spannratsche der Figur 1 von unterschiedlichen Seiten.

Eine Spannratsche 1 umfasst ein Gehäuse 2, das aus einem U-förmig gebogenen Stahlblech hergestellt ist und einen Boden 20 aufweist, von dem zwei Schenkel 21 senkrecht hervorstehen. Zumindest an einem Schenkel 21 ist ein parallel zum Boden 20 ausgerichteter Flansch 22 vorgesehen, mittels dem das Gehäuse 2 an einem weiteren Bauteil fixiert werden kann. Die Spannratsche 1 wird insbesondere zum Spannen von Planen an LKWs eingesetzt, aber auch andere Einsatzzwecke sind möglich.

An dem Gehäuse 2 ist ein Antriebshebel 3 drehbar gelagert, der einen rohrförmigen Abschnitt 4 aufweist, der einen Griffabschnitt ausbildet und von dem Gehäuse 2 hervorsteht. Der rohrförmige Abschnitt 4 ist an einem Hebelelement 5 verschiebbar gelagert, wobei das Hebelelement 5 zwei Ringe 6 aufweist, die um eine Antriebswelle 7 drehbar gelagert sind. Die Antriebswelle 7 steht an einem Schenkel 21 aus dem Gehäuse 2 hervor und weist dort ein Mehrkantprofil 8 auf, insbesondere ein Vierkant, das mit einem Abtriebselement gekoppelt werden kann. Die Antriebswelle 7 ist an den beiden Schekeln 21 des Gehäuses 2 drehbar gelagert, wobei entsprechende Lagerelemente an einer Sicke des Gehäuses 2 vorgesehen sein können, beispielsweise Gleitlager.

Zwischen den beiden Ringen 6 des Hebelelementes 5 ist ein Zahnkranz 9 drehfest mit der Antriebswelle 7 verbunden. Der Zahnkranz 9 weist radial nach außen hervorstehende Zähne auf und kann über den Antriebshebel 3 in eine Antriebsrichtung gedreht werden. Hierfür ist mit dem rohrförmigen Abschnitt 4 ein Kopplungselement 10 verbunden, das über eine Feder in eine Eingriffsposition mit dem Zahnkranz 9 vorgespannt ist. Dadurch kann durch ein Drehen des Antriebshebels 3 um die Antriebswelle 7 auch der Zahnkranz 9 in eine erste Richtung gedreht werden, während in eine gegenüberliegende Richtung das Kopplungselement 10 über die Zähne des Zahnkranzes 9 hinweg bewegt wird, so dass nur eine einseitige Drehbewegung erfolgt.

Um den Zahnkranz 9 nach einer Drehbewegung des Antriebshebels 3 in der neuen Position zu fixieren, ist eine Sperrklinke 11 vorgesehen, die in den Figuren von der Antriebswelle 7 gesehen auf der von dem Antriebshebel 3 abgewandten Seite an dem Gehäuse 2 angeordnet ist. Die Sperrklinke 11 ist an einer Lagerhülse 12 drehbar um einen Zapfen 13 gelagert, der an gegenüberliegenden Seiten an einem Schenkel 21 des Gehäuses 2 fixiert ist. Die Sperrklinke 11 ist dabei drehfest mit zwei Betätigungsabschnitten 14 verbunden, die die Sperrklinke 11 umgeben und von dem Boden 20 des Gehäuses mit einem Betätigungsvorsprung hervorstehen. Die Sperrklinke 11 und die Betätigungsabschnitte 14 sind dabei über eine Feder 15 in eine verriegelte Position vorgespannt. Die Feder 15 ist auf einer Seite an dem Boden 20 des Gehäuses 2 abgestützt und an der gegenüberliegenden Seite an der Sperrklinke 11, die dadurch mit einem vorderen Abschnitt in Eingriff mit dem Zahnkranz 9 gehalten wird.

Bei einer Drehbewegung des Antriebshebels 3 wird der Zahnkranz 9 gedreht, wobei die Sperrklinke 11 den Zahnkranz 9 in eine Richtung passieren lässt und durch die Feder 15 elastisch gelagert wird. Nach Beendigung der Drehbewegung rastet die Sperrklinke 11 an dem Zahnkranz 9 ein und verhindert somit eine rückwärtige Drehbewegung des Zahnkranzes 9 und der Antriebswelle 7. In dieser Position kann der Antriebshebel 3 wieder in die Ausgangsposition zurückbewegt werden, in der der rohrförmige Abschnitt 4 im Wesentlichen parallel zu dem Boden 20 des Gehäuses 2 ausgerichtet ist.

Soll die Spannratsche 1 nun aus einer gespannten Position entriegelt werden, wird zunächst an dem rohrförmigen Abschnitt 4 des Antriebshebels 3 in radiale Richtung gezogen, so dass das Kopplungselement 10 außer Eingriff mit dem Zahnkranz 9 gelangt. Der Zahnkranz 9 kann aufgrund der Sperrwirkung durch die Sperrklinke 11 immer noch nicht gedreht werden. Nach dem Entriegeln des Kopplungselementes 10 kann der Antriebshebel 3 unter Beibehaltung der Vorspannung des rohrförmigen Abschnittes 4 in radiale Richtung um etwa 180° gedreht werden, so dass der rohrförmige Abschnitt 4 oder ein anderes Teil des Antriebshebels 3 gegen mindestens einen Betätigungsabschnitt 14 der Sperrklinke 11 drückt. Dadurch kann die Sperrklinke 11 gegen die Kraft der Feder 15 außer Eingriff mit dem Zahnkranz 9 gebracht werden, so dass die Antriebswelle 7 nun frei gedreht werden kann, insbesondere aufgrund der Vorspannung eines mit der Antriebswelle 7 gekoppelten Bauteiles gedreht werden kann.

In dem dargestellten Ausführungsbeispiel ist nur eine Sperrklinke 11 vorgesehen, die von zwei seitlichen Betätigungsabschnitten 14 eingefasst ist. Es ist natürlich auch möglich, mehr als eine Sperrklinke 11 vorzusehen, die über einen gemeinsamen Betätigungsabschnitt entriegelt werden können. Bei Einsatz mehrerer Sperrklinken 11 kann über mehrere Betätigungsabschnitte auch ein schrittweises Entriegeln erfolgen.

Zudem ist es möglich, statt einer Zugbewegung des rohrförmigen Abschnittes 4 auch eine Schiebebewegung in radiale Richtung zur Antriebswelle 7 vorzunehmen, um das Kopplungselement 10 von dem Zahnkranz 9 zu lösen. Der rohrförmige Abschnitt 4 ist vorzugsweise durch ein Federelement in eine Ausgangsposition vorgespannt, so dass nur nach einer Schiebebewegung in radiale Richtung eine Entriegelung des Kopplungselementes 10 erfolgt.

Um die Antriebswelle 7 nicht nur in eine Antriebsrichtung drehen zu können, ist es möglich, an dem Antriebshebel 3 Umschaltmittel vorzusehen, so dass über das Kopplungselement 10 der Zahnkranz 9 auch gegen die Antriebsrichtung gedreht werden kann.

### Bezugszeichenliste

- 1: Spannratsche
- 2: Gehäuse
- 3: Antriebshebel
- 4: Abschnitt
- 5: Hebelelement
- 6: Ring
- 7: Antriebswelle
- 8: Mehrkantprofil
- 9: Zahnkranz
- 10: Kopplungselement
- 11: Sperrklinke
- 12: Lagerhülse
- 13: Zapfen
- 14: Betätigungsabschnitt
- 15: Feder
- 20: Boden
- 21: Schenkel
- 22: Flansch

## Patentansprüche

1. Spannratsche (1), insbesondere zum Spannen von Planen an LKWs, mit einem Gehäuse (2), an dem eine Antriebswelle (7) drehbar gelagert ist, wobei ein Zahnkranz (9) drehfest mit der Antriebswelle (7) verbunden ist und über mindestens eine Sperrklinke (11) in unterschiedlichen Winkelpositionen fixierbar ist, und einem Antriebshebel (3) zum Drehen der Antriebswelle (7), wobei der Antriebshebel (3) über ein Kopplungselement (10) zumindest in eine Antriebsrichtung mit dem Zahnkranz (9) koppelbar ist, und ein Abschnitt (4) des Antriebshebels (3) in radiale Richtung bewegbar ist, um das Kopplungselement (10) außer Eingriff mit dem Zahlkranz (9) zu bringen, wobei die mindestens eine Sperrklinke (11) drehbar an dem Gehäuse (2) gelagert ist und drehfest mit einem Betätigungsabschnitt (14) zum Entriegeln der Sperrklinke (11) verbunden ist, **dadurch gekennzeichnet, dass** der Antriebshebel (3) gegen den Betätigungsabschnitt (14) bewegbar ist, um die Sperrklinke (11) zu entriegeln.

2. Spannratsche nach Anspruch 1, **dadurch gekennzeichnet, dass** der Antriebshebel (3) einen rohrförmigen Abschnitt (4) aufweist, der relativ zu einem drehbar gelagerten Hebelelement (5) verschiebbar ist.

3. Spannratsche nach Anspruch 2, **dadurch gekennzeichnet, dass** der rohrförmige Abschnitt (4) und das Kopplungselement (10) durch eine Feder in die verriegelte Position vorgespannt sind.

4. Spannratsche nach einem der vorhergehenden Ansprüche, **dadurch gekennzeichnet, dass** die mindestens eine Sperrklinke (11) in die verriegelte Position über eine Feder (15) vorgespannt ist.

5. Spannratsche nach einem der vorhergehenden Ansprüche, **dadurch gekennzeichnet, dass** der Antriebshebel (3) im Wesentlichen um 180° an dem Gehäuse (2) verschwenkbar gelagert ist.

6. Spannratsche nach einem der vorhergehenden Ansprüche, **dadurch gekennzeichnet, dass** das Gehäuse (2) ein U-förmig gebogenes Stahlblech aufweist oder aus diesem gebildet ist.

## Claims

1. Ratchet tensioner (1), in particular for tensioning tarpaulins on trucks, having a housing (2) on which a drive shaft (7) is rotatably mounted, wherein a toothed rim (9) is connected in a rotationally fixed manner to the drive shaft (7) and is fixable in different angular positions via at least one pawl (11), and having a drive lever (3) for rotating the drive shaft (7), wherein the drive lever (3) can be coupled via a coupling element (10) to the toothed rim (9) at least in one drive direction, and a section (4) of the drive lever (3) is movable in the radial direction to bring the coupling element (10) out of engagement with the toothed rim (9), wherein the at least one pawl (11) is rotatably mounted on the housing (2) and is connected in a rotationally fixed manner to an actuating section (14) for unlocking the pawl (11), **characterized in that** the drive lever (3) is movable against the actuating section (14) to unlock the pawl (11).

2. Ratchet tensioner according to claim 1, **characterized in that** the drive lever (3) has a tubular section (4) which is displaceable relative to a rotatably mounted lever element (5).

3. Ratchet tensioner according to claim 2, **characterized in that** the tubular section (4) and the coupling element (10) are pretensioned into the locked position by a spring.

4. Ratchet tensioner according to one of the preceding claims, **characterized in that** the at least one pawl (11) is pretensioned into the locked position via a spring (15).

5. Ratchet tensioner according to one of the preceding claims, **characterized in that** the drive lever (3) is mounted on the housing (2) so as to be pivotable substantially by 180°.

6. Ratchet tensioner according to one of the preceding claims, **characterized in that** the housing (2) comprises a U-shaped bent steel sheet or is formed therefrom.

## Revendications

1. Tendeur à cliquet (1), en particulier pour tendre des bâches sur des camions, comportant un boîtier (2) sur lequel un arbre d'entraînement (7) est monté rotatif, une couronne dentée (9) étant reliée de manière solidaire en rotation à l'arbre d'entraînement (7) et pouvant être fixée dans différentes positions angulaires par au moins un cliquet de verrouillage (11), et comportant un levier d'entraînement (3) pour faire tourner l'arbre d'entraînement (7), le levier d'entraînement (3) pouvant être accouplé à la couronne dentée (9) au moins dans une direction d'entraînement au moyen d'un élément d'accouplement (10), et une partie (4) du levier d'entraînement (3) étant mobile dans la direction radiale pour libérer l'élément d'accouplement (10) de l'engagement avec la couronne dentée (9), ledit au moins un cliquet de verrouillage (11) étant monté rotatif sur le boîtier (2) et relié de manière solidaire en rotation à une partie d'actionnement (14) pour déverrouiller le cliquet de verrouillage (11), **caractérisé en ce que** le levier d'entraînement (3) est mobile contre la partie d'actionnement (14) pour déverrouiller le cliquet de verrouillage (11).

2. Tendeur à cliquet selon la revendication 1, **caractérisé en ce que** le levier d'entraînement (3) présente une partie tubulaire (4) qui est déplaçable par rapport à un élément de levier (5) monté rotatif.

3. Tendeur à cliquet selon la revendication 2, **caractérisé en ce que** la partie tubulaire (4) et l'élément d'accouplement (10) sont précontraints en position verrouillée par un ressort.

4. Tendeur à cliquet selon l'une des revendications précédentes, **caractérisé en ce que** ledit au moins un cliquet de verrouillage (11) est précontraint en position verrouillée par un ressort (15).

5. Tendeur à cliquet selon l'une des revendications précédentes, **caractérisé en ce que** le levier d'entraînement (3) est monté sur le boîtier (2) de manière à pouvoir pivoter sensiblement de 180°.

6. Tendeur à cliquet selon l'une des revendications précédentes, **caractérisé en ce que** le boîtier (2) présente ou est formé d'une tôle d'acier pliée en U.
